# EUROPEAN PATENT SPECIFICATION

(11) **EP 3 666 555 B1**
(45) Date of publication and mention of the grant of the patent: **02.06.2021**
(21) Application number: 19206475.6
(22) Date of filing: 31.10.2019
(51) Int. Cl.: B60C 13/00

(54) **TIRE**
REIFEN
PNEUMATIQUE

(30) Priority: 11.12.2018 JP 2018231887
(43) Date of publication of application: 17.06.2020
(73) Proprietor: Sumitomo Rubber Industries, Ltd., Kobe-shi, Hyogo-ken 651-0072 (JP)
(72) Inventor: NAKAJIMA, Koichi, Kobe-shi Hyogo 651-0072 (JP)
(74) Representative: Manitz Finsterwald Patent- und Rechtsanwaltspartnerschaft mbB

(56) References cited:
- EP-A1- 0 490 247
- EP-A1- 3 533 633
- JP-A- 2008 273 505
- JP-A- 2017 001 437

## Description

### BACKGROUND OF THE INVENTION

### Field of the Invention

The present invention relates to a tire in which a mark formed on a sidewall portion has improved visibility.

### Description of the Background Art

On the surfaces of sidewall portions of tires, marks such as characters and symbols indicating, for example, the names of manufacturers, the brand names, and the sizes of the tires are formed. In order to improve the visibility of these marks, Japanese Laid-Open Patent Publication No. 10-86615 proposes, as shown in FIG. 11, a tire in which a mark a is formed such that a surface b thereof has, for example, an angled shape composed of a slope b1 tilted gradually and linearly from one end to the center of the surface b in the tire radial direction, and a slope b2 tilted gradually and linearly from the other end of the surface b to said center.

In the above-proposed tire, since the slopes b1 and b2 are tilted in opposite directions, contrast in appearance can be obtained, and thus the visibility of the mark is improved.

However, since the number of slopes per mark is two, change in the contrast is monotonous, and there is room for further improvement of the visibility.

EP 3 533 633 A1 and EP 0 490 247 A1 respectively disclose a tire according to the preamble of claim 1 that has letters provided on a sidewall. The letters are each provided with a ridgeline or ridgelines which divide a surface into tilted surface portions.

### SUMMARY OF THE INVENTION

An object of the present invention is to provide a tire capable of making complicated changes to contrast, in appearance, on a surface of a mark, and thus capable of further improving the visibility of the mark.

The present invention is a tire including a sidewall portion on which a mark indication portion having one or more marks is formed.

The mark indication portion has a reference surface provided to a surface of the sidewall portion, and the marks projecting from the reference surface.

Each mark is divided into a plurality of constituent portions in a plan view.

Each of surfaces of at least two of the constituent portions is divided, by a ridgeline traversing the surface, into a first surface portion located on one side of the ridgeline and a second surface portion located on another side of the ridgeline.

Each of the first surface portion and the second surface portion is tilted so as to be oriented such that a height thereof from the reference surface decreases as a distance from the ridgeline increases.

Each constituent portion has, in a plan view, a substantially quadrilateral shape formed by four linear or curved sides, and the ridgeline extends as a diagonal of the substantially quadrilateral shape.

In the tire according to the present invention, in each constituent portion, the ridgeline preferably has a uniform height from the reference surface.

In the tire according to the present invention, in one of the marks, the ridgelines of the respective constituent portions preferably have equal heights from the reference surface.

In the tire according to the present invention, in each constituent portion, a minimum height from the reference surface of the first surface portion is preferably equal to a minimum height from the reference surface of the second surface portion.

In the tire according to the present invention, in one of the marks, minimum heights of the first surface portions and minimum heights of the second surface portions of the respective constituent portions are preferably equal to one another.

In the tire according to the present invention, each of the first surface portion and the second surface portion is preferably a flat surface or a curved surface that has a recessed shape or a projecting shape.

In the tire according to the present invention, the ridgeline is preferably a straight line or an arc-shaped curve.

In the present invention, each mark is divided into the plurality of constituent portions in a plan view, and each of the surfaces of at least two of the constituent portions is formed by the first surface portion and the second surface portion which are tilted in opposite directions from the ridgeline serving as a boundary.

That is, the surface of each mark includes four or more slopes tilted in different directions. Accordingly, complicated changes can be made to the contrast on the surface of the mark, and thus the visibility of the mark can be further improved.

Furthermore, if the surface of one mark is formed by two slopes, the tilt angle of each slope relative to a reference surface cannot be sufficiently ensured and thus the contrast itself becomes small, whereas, if each of the surfaces of the plurality of constituent portions obtained by division is formed by two slopes as in the present invention, the tilt angle of each slope can be made large. Accordingly, depth can be added to the mark, and this depth is combined with increase in the contrast, to further improve the visibility.

### BRIEF DESCRIPTION OF THE DRAWINGS

FIG. 1 is a side view of a part of a sidewall portion of a tire according to one embodiment of the present invention;
FIG. 2(a) is a plan view of a mark "A";
FIG. 2(b) is a plan view of constituent portions into which the mark is exploded;
FIG. 3 is a cross-sectional view taken along the line Y-Y in FIG. 2(b);
FIG. 4(a) is a perspective view of the mark "A";
FIG. 4(b) is a perspective view of constituent portions into which the mark is exploded;
FIGS. 5(a) to (c) are plan views of constituent portions into which marks "L", "K", and "E" are exploded;
FIG. 6(a) is a perspective view of the mark "L";
FIG. 6(b) is a perspective view of constituent portions into which the mark is exploded;
FIG. 7(a) is a perspective view of the mark "K";
FIG. 7(b) is a perspective view of constituent portions into which the mark is exploded;
FIG. 8(a) is a perspective view of the mark "E";
FIG. 8(b) is a perspective view of constituent portions into which the mark is exploded;
FIGS. 9(a) and (b) are respectively a plan view and a perspective view of exemplary marks not covered by the present invention;
FIG. 10(A) is a partial plan view showing a state of an array when minute projection portions are truncated cone-shaped projections;
FIG. 10(B) is a cross-sectional view of the truncated cone-shaped projections; and
FIG. 11 shows a plan view of a mark in a conventional technology, and a cross-sectional view taken along the line A-A in the plan view.

### DESCRIPTION OF THE PREFERRED EMBODIMENTS

Hereinafter, an embodiment of the present invention will be described in detail.

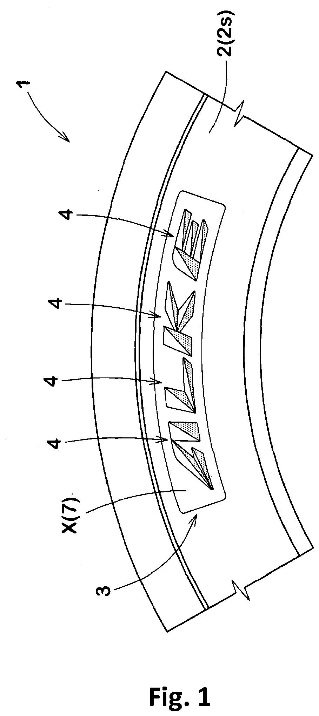

As shown in FIG. 1, in a tire 1 according to the present embodiment, one or more mark indication portions 3 are formed on at least one of sidewall portions 2. Each mark indication portion 3 has a reference surface X provided to a surface 2s of the sidewall portion 2, and one or more marks 4 projecting from the reference surface X. In this example, the mark indication portion 3 has a base portion 7 projecting stepwise at a uniform height from the surface 2s of the sidewall portion 2, and a surface of the base portion 7 forms the reference surface X. The base portion 7 does not have to be provided, and in this case, the surface 2s of the sidewall portion 2 serves as the reference surface X.

The marks 4 mean characters, symbols, figures, and the like in a minimum unit for indicating, for example, the name of a manufacturer, the brand name, and the size of the tire. In this example, on the mark indication portion 3, a character string (for example, a brand name) "ALKE" composed of four marks 4, i.e., "A", "L", "K", and "E", is formed, for example. Each mark 4 projects from the reference surface X at a low height.

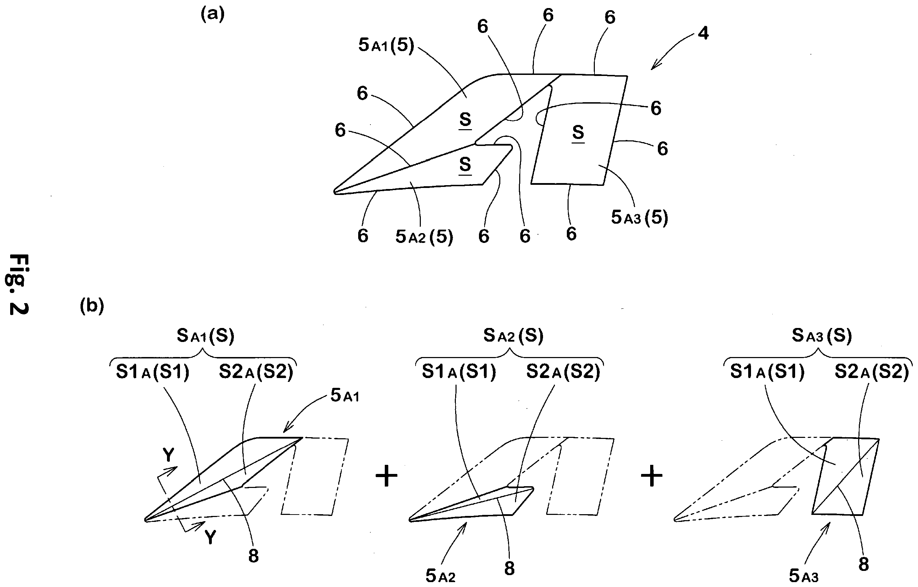

FIGS. 2(a) and (b) representatively show the mark 4 "A". As shown in FIGS.2(a) and (b), the mark 4 is, in a plan view, divided into a plurality of constituent portions (in this example, three constituent portions 5_{A1}, 5_{A2}, and 5_{A3}). The constituent portions 5_{A1}, 5_{A2}, and 5_{A3} are referred to as constituent portions 5 when collectively referred to. In this example, each constituent portion 5 has, in a plan view, a substantially quadrilateral shape formed by four sides 6. Each side 6 has a linear shape or a smoothly curved shape.

As shown in FIG. 2(b), each of surfaces S of at least two constituent portions 5 among all the constituent portions 5 (in this example, the surfaces S of all the constituent portions 5) is divided, by a ridgeline 8 traversing the surface S, into a first surface portion S1 located on one side of the ridgeline 8 and a second surface portion S2 located on the other side of the ridgeline 8.

In this example, a surface S_{A1} of the constituent portion 5_{A1} is divided into a first surface portion S1_{A} and a second surface portion S2_{A} by a ridgeline 8. A surface S_{A2} of the constituent portion 5_{A2} is divided into a first surface portion S1_{A} and a second surface portion S2_{A} by a ridgeline 8. A surface S_{A3} of the constituent portion 5_{A3} is divided into a first surface portion S1_{A} and a second surface portion S2_{A} by a ridgeline 8.

Here, each ridgeline 8 preferably extends as a diagonal of the substantially quadrilateral shape of the corresponding constituent portion 5. In order to complicate contrast in appearance, the ridgeline 8 particularly preferably extends in the direction of a diagonal that is longer between two diagonals each joining opposite vertices.

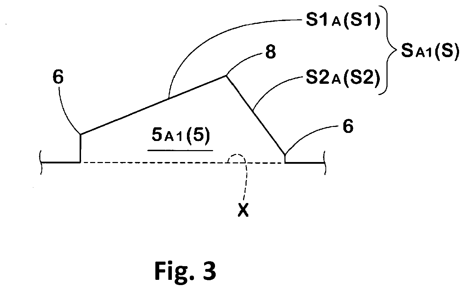

FIG. 3 shows a cross section taken along the line Y-Y of the constituent portion 5_{A1} in FIG. 2(b), as an example of a cross section of the constituent portion 5 in a direction orthogonal to the ridgeline 8. As shown in FIG. 3, each of the first surface portion S1 and the second surface portion S2 is tilted so as to be oriented such that the height thereof from the reference surface X decreases as the distance from the ridgeline 8 increases. That is, the first surface portion S1 and the second surface portion S2 are tilted in opposite directions. Accordingly, the contrast can be obtained between the first surface portion S1 and the second surface portion S2.

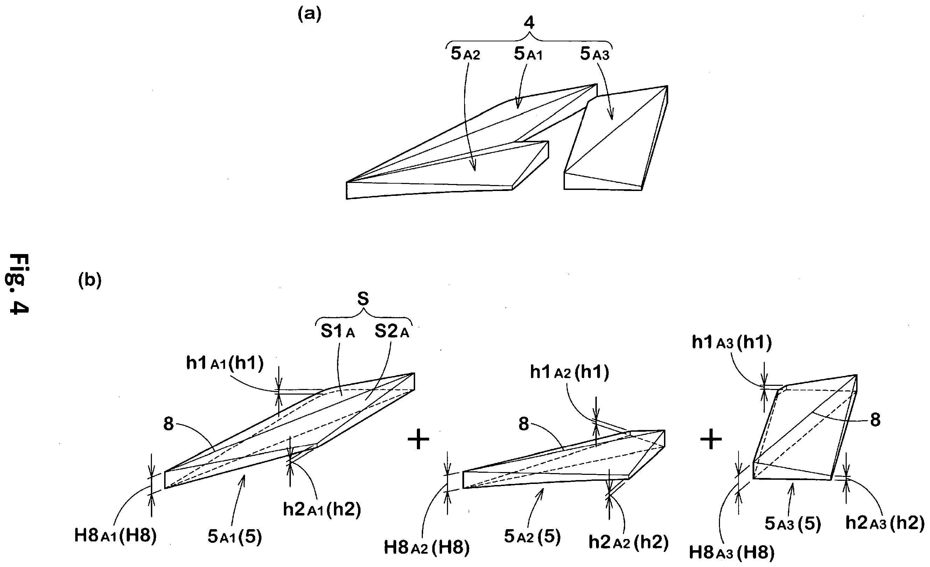

FIG. 4(a) is a perspective view of the mark 4 "A", and FIG. 4(b) is an exploded perspective view of the constituent portions 5_{A1}, 5_{A2}, and 5_{A3} into which the mark 4 "A" is exploded.

As shown in FIG. 4(b), in the constituent portion 5_{A1}, the ridgeline 8 thereof has a uniform height H8_{A1} from the reference surface X in this example. Similarly, in the constituent portion 5_{A2}, the ridgeline 8 thereof has a uniform height H8_{A2} from the reference surface X, and, in the constituent portion 5_{A3}, the ridgeline 8 thereof has a uniform height H8_{A3} from the reference surface X. Furthermore, the heights H8_{A1}, H8_{A2}, and H8_{A3} of the ridgelines 8 are set to be equal to one another in this example.

That is, in each constituent portion 5, the ridgeline 8 has a uniform height H8 from the reference surface X in this example. Furthermore, in one of the marks 4, the ridgelines 8 of the respective constituent portions 5 are set to have equal heights H8 from the reference surface X.

Moreover, in the constituent portion 5_{A1}, the minimum height h1_{A1} from the reference surface X of the first surface portion S1_{A} is equal to the minimum height h2_{A1} from the reference surface X of the second surface portion S2_{A} in this example. Similarly, in the constituent portion 5_{A2}, the minimum height h1_{A2} from the reference surface X of the first surface portion S1_{A} is equal to the minimum height h2_{A2} from the reference surface X of the second surface portion S2_{A}, and, in the constituent portion 5_{A3}, the minimum height h1_{A3} from the reference surface X of the first surface portion S1_{A} is equal to the minimum height h2_{A3} from the reference surface X of the second surface portion S2_{A}. Furthermore, the minimum heights h1_{A1}, h1_{A2}, h1_{A3}, h2_{A1}, h2_{A2}, and h2_{A3} are equal to one another in this example.

That is, in each constituent portion 5, the minimum height h1 from the reference surface X of the first surface portion S1 is equal to the minimum height h2 from the reference surface X of the second surface portion S2 in this example. Furthermore, in one of the marks 4, the minimum heights h1 of the first surface portions S1 and the minimum heights h2 of the second surface portions S2 of the respective constituent portions 5 are set to be equal to one another.

With such a mark 4, while a sense of unity among the constituent portions 5 can be perceived, the contrast can be complicated, whereby an effect of improving visibility can be further enhanced. On the contrary, if the heights H8 or the minimum heights h1 and h2 are different among the constituent portions 5, there is a lack of unity among the constituent portions 5, resulting in disadvantage in terms of the recognizability as one mark 4.

In this example, the ridgeline 8 is formed as a straight line in a plan view. However, the ridgeline 8 can be formed also as an arc-shaped curve.

In this example, each of the first surface portion S1 and the second surface portion S2 is formed as a flat surface. However, each of the first surface portion S1 and the second surface portion S2 can be formed also as a curved surface having a recessed shape or a projecting shape. The curved surface encompasses a twisted surface.

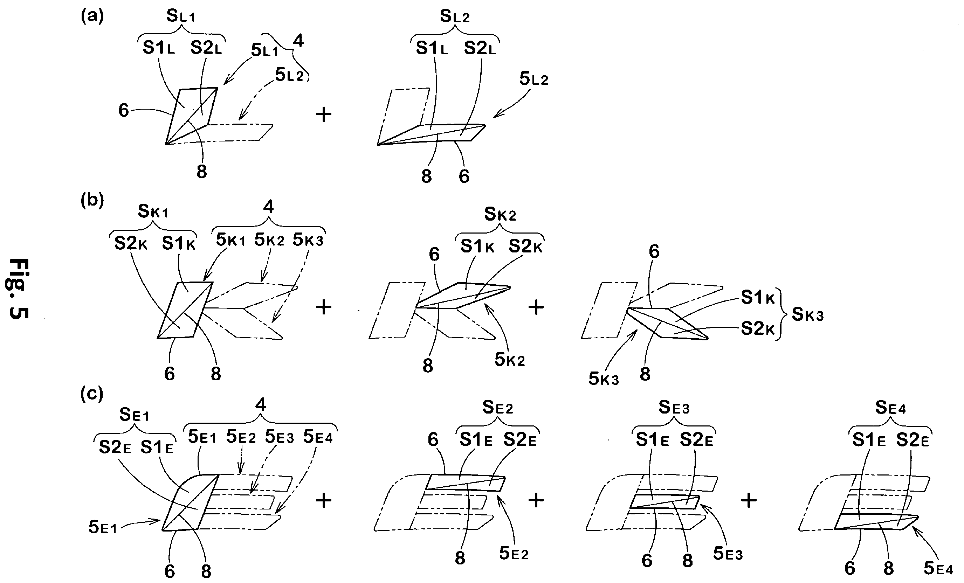

The same applies also to the other marks 4 ("L", "K", and "E"), and, as shown in FIGS. 5(a) to (c), each mark 4 is divided into a plurality of constituent portions 5 in a plan view.

As shown in FIG. 5(a), the mark 4 "L" is divided into two constituent portions 5_{L1} and 5_{L2}. Each of surfaces S_{L1} and S_{L2} of the respective constituent portions 5_{L1} and 5_{L2} is divided into a first surface portion S1_{L} and a second surface portion S2_{L} by a ridgeline 8. In this example, each of the constituent portions 5_{L1} and 5_{L2} has a substantially quadrilateral shape formed by four sides 6, and each ridgeline 8 extends as a diagonal.

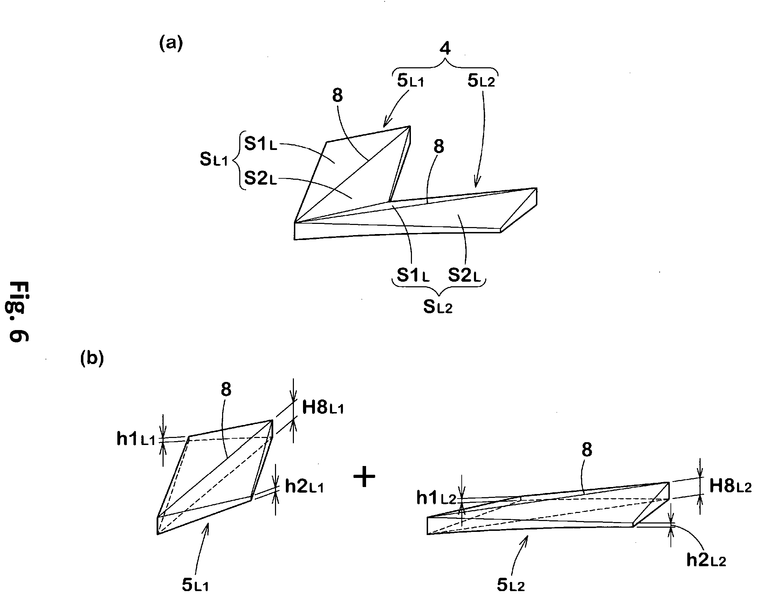

As shown in FIGS. 6(a) and (b), in each of the constituent portions 5_{L1} and 5_{L2}, the first surface portion S1_{L} and the second surface portion S2_{L} are tilted in opposite directions from the ridgeline 8.

The height H8_{L1} from the reference surface X of the ridgeline 8 of the constituent portion 5_{L1} and the height H8_{L2} from the reference surface X of the ridgeline 8 of the constituent portion 5_{L2} are each uniform. In addition, the height H8_{L1} and the height H8_{L2} are set to be equal to each other.

In the constituent portion 5_{L1}, the minimum height h1_{L1} of the first surface portion S1_{L} and the minimum height h2_{L1} of the second surface portion S2_{L} are equal to each other. In the constituent portion 5_{L2}, the minimum height h1_{L2} of the first surface portion S1_{L} and the minimum height h2_{L2} of the second surface portion S2_{L} are equal to each other. The minimum heights h1_{L1}, h1_{L2}, h2_{L1}, and h2_{L2} are equal to one another.

As shown in FIG. 5(b), the mark 4 "K" is divided into three constituent portions 5_{K1}, 5_{K2}, and 5_{K3}. Each of surfaces S_{K1} to S_{K3} of the respective constituent portions 5_{K1} to 5_{K3} is divided into a first surface portion S1_{K} and a second surface portion S2_{K} by a ridgeline 8. In this example, each of the constituent portions 5_{K1} to 5_{K3} has a substantially quadrilateral shape formed by four sides 6, and each ridgeline 8 extends as a diagonal.

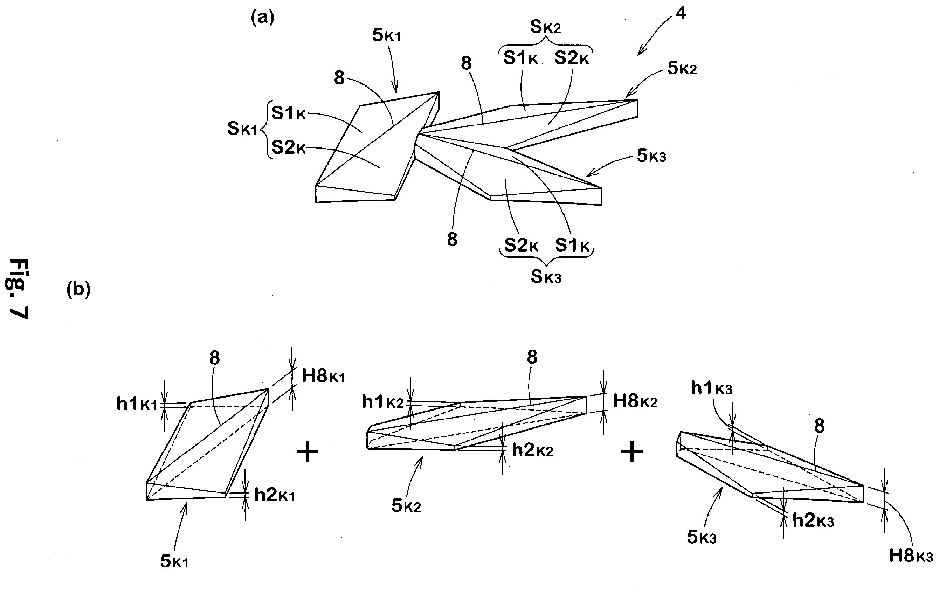

As shown in FIGS. 7(a) and (b), in each of the constituent portions 5_{K1} to 5_{K3}, the first surface portion S1_{K} and the second surface portion S2_{K} are tilted in opposite directions from the ridgeline 8.

The height H8_{K1} from the reference surface X of the ridgeline 8 of the constituent portion 5_{K1}, the height H8_{K2} from the reference surface X of the ridgeline 8 of the constituent portion 5_{K2}, and the height H8_{K3} from the reference surface X of the ridgeline 8 of the constituent portion 5_{K3}, are each uniform. In addition, the height H8_{K1}, the height H8_{K2}, and the height H8_{K3} are set to be equal to one another.

Moreover, in the constituent portion 5_{K1}, the minimum height h1_{K1} of the first surface portion S1_{K} and the minimum height h2_{K1} of the second surface portion S2_{K} are equal to each other. In the constituent portion 5_{K2}, the minimum height h1_{K2} of the first surface portion S1_{K} and the minimum height h2_{K2} of the second surface portion S2_{K} are equal to each other. In the constituent portion 5_{K3}, the minimum height h1_{K3} of the first surface portion S1_{K} and the minimum height h2_{K3} of the second surface portion S2_{K} are equal to each other. The minimum heights h1_{K1}, h1_{K2}, h1_{K3}, h2_{K1}, h2_{K2}, and h2_{K3} are equal to one another.

As shown in FIG. 5(c), the mark 4 "E" is divided into four constituent portions 5_{E1}, 5_{E2}, 5_{E3}, and 5_{E4}. Each of surfaces S_{E1} to S_{E4} of the respective constituent portions 5_{E1} to 5_{E4} is divided into a first surface portion S1_{E} and a second surface portion S2_{E} by a ridgeline 8. In this example, each of the constituent portions 5_{E1} to 5_{E4} has a substantially quadrilateral shape formed by four sides 6, and each ridgeline 8 extends as a diagonal.

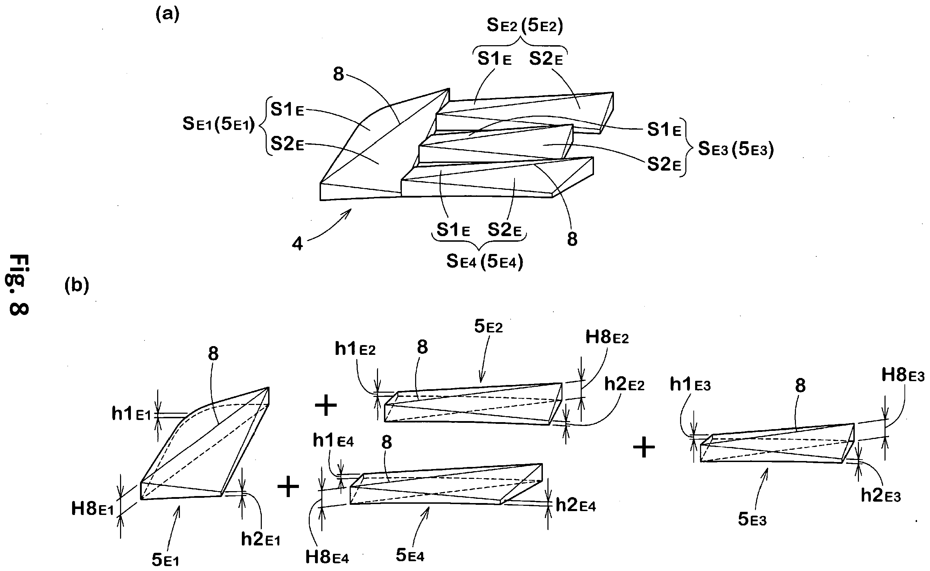

As shown in FIGS. 8(a) and (b), in each of the constituent portions 5_{E1} to 5_{E4}, the first surface portion S1_{E} and the second surface portion S2_{E} are tilted in opposite directions from the ridgeline 8.

The height H8_{E1} from the reference surface X of the ridgeline 8 of the constituent portion 5_{E1}, the height H8_{E2} from the reference surface X of the ridgeline 8 of the constituent portion 5_{E2}, the height H8_{E3} from the reference surface X of the ridgeline 8 of the constituent portion 5_{E3}, and the height H8_{E4} from the reference surface X of the ridgeline 8 of the constituent portion 5_{E4}, are each uniform. The height H8_{E1}, the height H8_{E2}, the height H8_{E3}, and the height H8_{E4} are set to be equal to one another.

Moreover, in the constituent portion 5_{E1}, the minimum height h1_{E1} of the first surface portion S1_{E} and the minimum height h2_{E1} of the second surface portion S2_{E} are equal to each other. In the constituent portion 5_{E2}, the minimum height h1_{E2} of the first surface portion S1_{E} and the minimum height h2_{E2} of the second surface portion S2_{E} are equal to each other. In the constituent portion 5_{E3}, the minimum height h1_{E3} of the first surface portion S1_{E} and the minimum height h2_{E3} of the second surface portion S2_{E} are equal to each other. In the constituent portion 5_{E4}, the minimum height h1_{E4} of the first surface portion S1_{E} and the minimum height h2_{E4} of the second surface portion S2_{E} are equal to each other. The minimum heights h1_{E1}, h1_{E2}, h1_{E3}, h1_{E4}, h2_{E1}, h2_{E2}, h2_{E3}, and h2_{E4} are equal to one another.

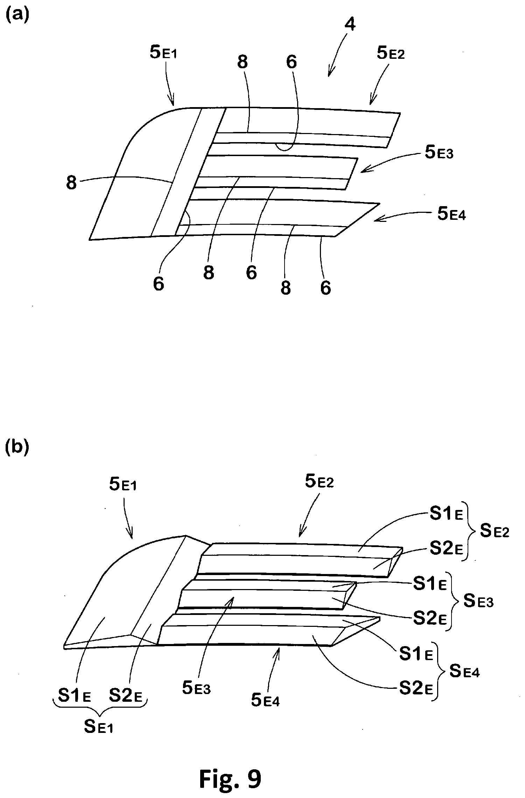

FIGS. 9(a) and (b) representatively show "E" as another example, which is not an embodiment covered by the claims, of one of the marks 4. The mark 4 is divided into the four constituent portions 5_{E1}, 5_{E2}, 5_{E3}, and 5_{E4} in a plan view. Each of the constituent portions 5_{E1} to 5_{E4} has the substantially quadrilateral shape formed by the four sides 6. Each of the surfaces S_{E1} to S_{E4} of the respective constituent portions 5_{E1} to 5_{E4} is divided into a first surface portion S1_{E} and a second surface portion S2_{E} by a ridgeline 8.

In the constituent portions 5_{E1} to 5_{E4}, the ridgelines 8 extend so as to traverse the respective surfaces S_{E1} to S_{E4} in, for example, the longitudinal directions. By such ridgelines 8, the surfaces S_{E1} to S_{E4} are each divided into the first surface portion S1_{E} and the second surface portion S2_{E} each having a substantially quadrilateral shape. In this case, each ridgeline 8 is preferably located parallel to any side 6 among the four sides 6.

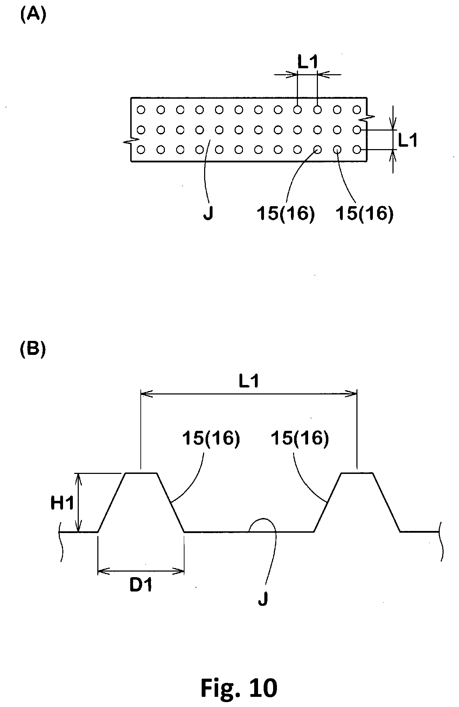

In each mark 4, a surface J which is one of the first surface portion S1 and the second surface portion S2 is, as shown in FIGS. 10(a) and (b), provided with a plurality of minute projection portions 15 projecting from the surface J. In this example, each minute projection portion 15 is a truncated cone-shaped projection 16 having a small diameter on the upper end side thereof. The maximum thickness D1 of the truncated cone-shaped projection 16 is preferably 50 to 1000 µm, the projection height H1 from the surface J of the truncated cone-shaped projection 16 is preferably 50 to 1000 µm, and the distance L1 between the centers of adjacent ones of the minute projection portions 15 and 15 is preferably 200 to 1000 µm.

Such truncated cone-shaped projections 16 can cause diffuse reflection of light and make the surface J look black. As a result, the contour shape of the mark 4 can be made clearly recognizable, and thus the visibility of the mark 4 can be improved. As a result of studies by the present inventor, it has been found that the surface J tends to look whitish owing to reflection of light and the contrast tends to decrease if any of the maximum thickness D1 and the projection height H1 of the truncated cone-shaped projection 16, and the distance L1 between the centers of the adjacent truncated cone-shaped projections 16 deviates from the corresponding one of the aforementioned ranges. In addition, since each minute projection portion 15 has a truncated cone shape, the minute projection portion 15 has improved strength and can further suppress the reflection of light as compared to a minute projection portion 15 having a columnar shape.

The truncated cone-shaped projections 16 are arrayed in a grid pattern in this example, but may be arrayed in a staggered pattern. Alternatively, the truncated cone-shaped projections 16 may be randomly arrayed as long as the distance L1 between the centers of the adjacent truncated cone-shaped projections 16 is within the aforementioned range.

The marks 4 are not limited to alphabets, numerals, and the like, and various characters, symbols, figures, and the like can be used.

Although the particularly preferred embodiment of the present invention has been described in detail above, the present invention is not limited to the embodiment shown in the drawings, and various modifications can be made to practice the present invention.

### EXAMPLES

Tires in which a character string (mark indication portion) "ALKE" composed of four marks was formed on the surface of a sidewall portion, were produced as samples based on the specifications in Table 1, and were compared in terms of the visibility of the marks. Each of the maximum height and the minimum height of the surface of each mark is the same among the tires.

As shown in FIG. 4(b), FIG. 6(b), FIG. 7(b), and FIG. 8(b), in Example 1, each mark 4 is divided into the plurality of constituent portions 5 each having a substantially quadrilateral shape, and the surface S of each constituent portion 5 is divided, by the ridgeline 8 extending as a diagonal, into the first surface portion and the second surface portion each having a substantially triangular shape. In one of the marks 4, the heights H8 of the ridgelines 8 are equal to one another. In addition, in one of the marks 4, the minimum heights h1 of the first surface portions S1 and the minimum heights h2 of the second surface portions S2 are equal to one another.

As shown in FIGS. 9(a) and (b), in Example 2, the ridgeline 8 is located parallel to any of the sides 6, and, by such a ridgeline 8, each surface S is divided into the first surface portion S1 and the second surface portion S2 each having a substantially quadrilateral shape. In one of the marks 4, the heights H8 of the ridgelines 8 are equal to one another. In addition, in one of the marks 4, the minimum heights h1 of the first surface portions S1 and the minimum heights h2 of the second surface portions S2 are equal to one another.

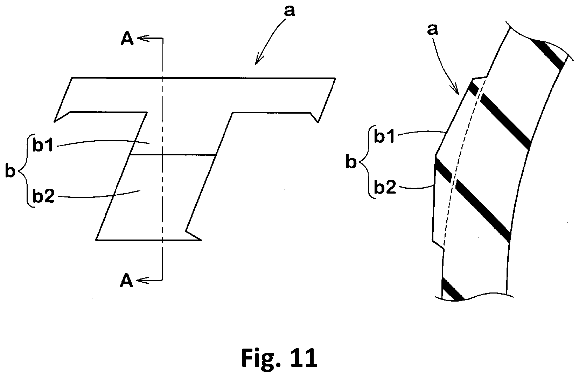

As shown in FIG. 11, in Comparative Example 1, a surface b of each of marks a is divided, by a ridgeline extending in the tire circumferential direction, into a slope b1 located outward in the tire radial direction and a slope b2 located inward in the tire radial direction. The height of the ridgeline is equal to the height H8 of the ridgeline 8 in each of Examples 1 and 2. In addition, the minimum heights of the slopes b1 and b2 are equal to the minimum heights h1 and h2 in each of Examples 1 and 2.

For visibility, visual sensory evaluations were conducted, and the results are indicated as indexes with the result of Comparative Example 1 being 100. A larger numeric value indicates better visibility.

**[Table 1]**

| | Comparative Example 1 | Example 1 | Example 2 |
|---|---|---|---|
| Division into constituent portions | Undivided, FIG. 11 | Divided, FIGS. 4 and 6-8 | Divided, FIG. 9 |
| Division of surface of each constituent portion by ridgeline | - | Divided | Divided |
| Direction of ridgeline | Circumferential direction | Diagonal | Parallel to side |
| Visibility | 100 | 120 | 120 |

From Table 1, it can be confirmed that the visibility of the marks is excellent in each Example.

## Claims

1. A tire (1) comprising a sidewall portion (2) on which a mark indication portion (3) having one or more marks (4) is formed, wherein
the mark indication portion (3) has a reference surface (X) provided to a surface (2s) of the sidewall portion (2), and the marks (4) projecting from the reference surface (X),
each mark (4) is divided into a plurality of constituent portions (5) in a plan view, each of surfaces (S) of at least two of the constituent portions (5) is divided, by a ridgeline (8) traversing the surface (S), into a first surface portion (S1) located on one side of the ridgeline (8) and a second surface portion (S2) located on another side of the ridgeline (8), and
each of the first surface portion (S1) and the second surface portion (S2) is tilted so as to be oriented such that a height thereof from the reference surface (X) decreases as a distance from the ridgeline (8) increases,
**characterized in that** each constituent portion (5) has, in a plan view, a substantially quadrilateral shape formed by four linear or curved sides (6), and the ridgeline (8) extends as a diagonal of the substantially quadrilateral shape.

2. The tire (1) according to claim 1, wherein,
in each constituent portion (5), the ridgeline (8) has a uniform height (H8) from the reference surface (X).

3. The tire (1) according to claim 2, wherein,
in one of the marks (4), the ridgelines (8) of the respective constituent portions (5) have equal heights (H8) from the reference surface (X).

4. The tire (1) according to any one of claims 1 to 3, wherein,
in each constituent portion (5), a minimum height (h1) from the reference surface (X) of the first surface portion (S1) is equal to a minimum height (h2) from the reference surface (X) of the second surface portion (S2).

5. The tire (1) according to claim 4, wherein,
in one of the marks (4), minimum heights (h1) of the first surface portions (S1) and minimum heights (h2) of the second surface portions (S2) of the respective constituent portions (5) are equal to one another.

6. The tire (1) according to any one of claims 1 to 5, wherein
each of the first surface portion (S1) and the second surface portion (S2) is a flat surface or a curved surface that has a recessed shape or a projecting shape.

7. The tire (1) according to any one of claims 1 to 6, wherein
the ridgeline (8) is a straight line or an arc-shaped curve.

## Patentansprüche

1. Reifen (1), der einen Seitenwandabschnitt (2) umfasst, an dem ein Markierungsanzeigeabschnitt (3) mit einer oder mehreren Markierungen (4) ausgebildet ist, wobei
der Markierungsanzeigeabschnitt (3) eine Bezugsfläche (X), die auf einer Fläche (2s) des Seitenwandabschnitts (2) vorgesehen ist, umfasst, und die Markierungen (4) auf der Bezugsfläche (X) vorstehen,
jede Markierung (4) in einer Draufsicht in eine Vielzahl von Bestandteilabschnitten (5) unterteilt ist, wobei eine jede der Flächen (S) von mindestens zwei der Bestandteilabschnitte (5) durch eine Kammlinie (8), die die Fläche (S) quert, in einen ersten Flächenabschnitt (S1), der sich auf einer Seite der Kammlinie (8) befindet, und einen zweiten Flächenabschnitt (S2), der sich auf einer anderen Seite der Kammlinie (8) befindet, unterteilt ist, und
jeder des ersten Flächenabschnitts (S1) und des zweiten Flächenabschnitts (S2) derart geneigt ist, dass er so ausgerichtet ist, dass seine Höhe mit zunehmendem Abstand von der Kammlinie (8) von der Bezugsfläche (X) aus abnimmt,
**dadurch gekennzeichnet, dass** jeder Bestandteilabschnitt (5) in einer Draufsicht eine im Wesentlichen viereckige Form aufweist, die durch vier gerade oder gekrümmte Seiten (6) gebildet ist, und dass sich die Kammlinie (8) als eine Diagonale der im Wesentlichen viereckigen Form erstreckt.

2. Reifen (1) nach Anspruch 1, wobei die Kammlinie (8) in jedem Bestandteilabschnitt (5) eine einheitliche Höhe (H8) von der Bezugsfläche (X) aus aufweist.

3. Reifen (1) nach Anspruch 2, wobei in einer der Markierungen (4) die Kammlinien (8) der jeweiligen Bestandteilabschnitte (5) gleiche Höhen (H8) von der Bezugsfläche (X) aus aufweisen.

4. Reifen (1) nach einem der Ansprüche 1 bis 3, wobei in jedem Bestandteilsabschnitt (5) eine minimale Höhe (h1) von der Bezugsfläche (X) des ersten Flächenabschnitts (S1) aus gleich einer minimalen Höhe (h2) von der Bezugsfläche (X) des zweiten Flächenabschnitts (S2) aufweist.

5. Reifen (1) nach Anspruch 4, wobei in einer der Markierungen (4) minimale Höhen (h1) der ersten Flächenabschnitte (S1) und minimale Höhen (h2) der zweiten Flächenabschnitte (S2) der jeweiligen Bestandteilabschnitte (5) gleich sind.

6. Reifen (1) nach einem der Ansprüche 1 bis 5, wobei jeder des ersten Flächenabschnitts (S1) und des zweiten Flächenabschnitts (S2) eine ebene Fläche oder eine gekrümmte Oberfläche ist, die eine vertiefte Form oder eine vorstehende Form aufweist.

7. Reifen (1) nach einem der Ansprüche 1 bis 6, wobei die Kammlinie (8) eine gerade Linie oder eine bogenförmige Kurve ist.

## Revendications

1. Pneumatique (1) comprenant une portion formant paroi latérale (2) sur laquelle est formée une portion d'indication de marquage (3) ayant un ou plusieurs marquages (4), dans lequel
la portion d'indication de marquage (3) a une surface de référence (X) prévue sur une surface (2s) de la portion formant paroi latérale (2), et les marquages (4) se projettent depuis la surface de référence (X),
chaque marquage (4) est divisé en une pluralité de portions constitutives (5) dans une vue en plan, chacune des surfaces (S) d'au moins deux des portions constitutives (5) est divisée, par une ligne de crête (8) traversant la surface (S), en une première portion de surface (S1) située sur un côté de la ligne de crête (8) et en une seconde portion de surface (S1) située sur un autre côté de la ligne de crête (8), et
chaque portion parmi la première portion de surface (S1) et la seconde portion de surface (S2) est inclinée de manière à être orientée de sorte qu'une hauteur de celle-ci depuis la surface de référence (X) diminue quand une distance depuis la ligne de crête (8) augmente,
**caractérisé en ce que** chaque portion constitutive (5) a, dans une vue en plan, une forme sensiblement quadrilatérale formée par quatre côtés linéaires ou incurvés (6), et la ligne de crête (8) s'étend à titre d'une diagonale de la forme sensiblement quadrilatérale.

2. Pneumatique (1) selon la revendication 1, dans lequel,
dans chaque portion constitutive (5), la ligne de crête (8) a une hauteur uniforme (H8) depuis la surface de référence (X).

3. Pneumatique (1) selon la revendication 2, dans lequel,
dans un des marquages (4), les lignes de crête (8) des portions constitutives (5) respectives ont des hauteurs égales (H8) depuis la surface de référence (X).

4. Pneumatique (1) selon l'une quelconque des revendications 1 à 3, dans lequel,
dans chaque portion constitutive (5), une hauteur minimum (h1) depuis la surface de référence (X) de la première portion de surface (S1) est égale à une hauteur minimum (h2) depuis la surface de référence (X) de la seconde portion de surface (S2).

5. Pneumatique (1) selon la revendication 4, dans lequel,
dans un des marquages (4), des hauteurs minimums (h1) des premières portions de surface (S1) et des hauteurs minimums (h2) des secondes portions de surface (S2) des portions constitutives (5) respectives sont égales les unes aux autres.

6. Pneumatique (1) selon l'une quelconque des revendications 1 à 5, dans lequel
chaque portion parmi la première portion de surface (S1) et la seconde portion de surface (S2) est une surface plane ou une surface incurvée qui a une forme évidée ou une forme en projection.

7. Pneumatique (1) selon l'une quelconque des revendications 1 à 6, dans lequel
la ligne de crête (8) est une ligne droite ou une courbe en forme d'arc.
